# EUROPÄISCHE PATENTSCHRIFT

(11) **EP 2 393 718 B1**
(45) Veröffentlichungstag und Bekanntmachung des Hinweises auf die Patenterteilung: **14.08.2013**
(21) Anmeldenummer: 09801161.2
(22) Anmeldetag: 16.12.2009
(51) Int. Cl.: B65D 1/02

(54) **HANDHABUNGSEINRICHTUNG UND HANDHABUNGSVERFAHREN FÜR BEHÄLTER SOWIE VORFORMLINGE**
HANDLING DEVICE AND HANDLING METHOD FOR CONTAINERS AND ALSO PRE-FORMS
DISPOSITIF DE MANUTENTION ET PROCEDE DE MANUTENTION POUR RECIPIENTS AINSI QUE PREFORMES

(30) Priorität: 06.02.2009 DE 102009007906; 06.02.2009 DE 102009007907
(43) Veröffentlichungstag der Anmeldung: 14.12.2011
(73) Patentinhaber: KHS GmbH, 44143 Dortmund (DE)
(72) Erfinder: DRENGUIS, Alfred, 21039 Börnsen (DE)
(86) Internationale Anmeldenummer: PCT/EP2009/009002
(87) Internationale Veröffentlichungsnummer: WO 2010/088940

(56) Entgegenhaltungen:
- WO-A1-02/098755
- DE-A1- 3 713 016
- DE-A1-102006 012 020
- DE-A1-102007 024 102
- DE-U1- 20 009 075
- US-A- 5 803 281
- US-A1- 2003 116 522
- US-A1- 2003 186 006
- US-A1- 2007 235 477

## Beschreibung

Die Erfindung betrifft eine Vorrichtung mit einer Halteeinrichtung zur Handhabung von Werkstücken aus einem thermoplastischen Material, die einen Mündungsabschnitt und einen Fixierring aufweisen.

Die Erfindung betrifft weiterhin ein Verfahren zur Handhabung von Werkatürken aus einem thermoplastischen Material, die einen Mündungsabschnitt und einen Fixierring aufweisen.

Derartige Vorformlinge werden typischerweise in einem Spritzgußverfahren hergestellt und sind aus geeigneten Materialien, beispielsweise PET oder PP, ausgebildet Zur Erleichterung einer Handhabung der Vorformlinge bei der Durchführung eines Blasvorgangs, belm Transport der geblasenen Behälter sowie bei der Durchführung des Füllvorganges werden entsprechende Vorformlinge und Behälter üblicherweise mit sogenannten Stützringen ausgebildet. Diese Stützringe sind in einem Bereich zwischen einem Münclungsabschnitt des Behälters und einer Schulter des Behälters angeordnet und werden üblicherweise bei der Durchführung des Spritzgussvorganges einteilig am Vorformlinge angeformt (US 2003/0186006 A1, US 5 803 281 A, US 2003/0116522 A1, DE 37 13 016 A1). Hierbei ist es auch bekannt (DE 37 13 013), die mit einem Stützring ausgebildeten Behälter in einer Füllmaschine an ihrem Stützring und an einem am Behältereinlauf oder Behälterauslauf vorgesehenen Transportstern oberhalb des Stützringes im Bereich eines dortigen Gewindes u.a. an einem Unterstützungselement zu halten, welches eine den Behälter im Bereich seines Gewindes aufnehmende Ausnehmung bildet und einen Behälterabschnitt oberhalb des Stützringes, möglicherweise Fixierring hintergreift.

Bekannt sind auch stützringlose Behälter aus Kunststoff (US 2007/0 235 477 A1, WO 02/098 755 A1). Speziell aufgrund ständig steigender Rohstoffpreise sowie unter ästhetischen Gesichtspunkten wurde auch bereits versucht, Vorformlinge und blasgeformte Behälter mit verkleinerten Stützringen oder ohne Stützringe auszubilden. Es fehlt bisher aber an praxistauglich Vorrichtungen und Verfahren für eine einfache und zugleich zuverlässige Handhabung solcher Vorformlinge und Behälter.

Aufgabe der vorliegenden Erfindung ist es daher, eine Vorrichtung sowie ein Verfahren zur einfachen und zuverlässigen Handhabung von stützringlosen Werkstücken, insbesondere von Vorformlingen oder stützringlosen Behälter der einleitend genannten Art, aufzuzeigen. Zur Lösung dieser Aufgabe ist eine Vorrichtung entsprechend dem Patentanspruch 1. Ein Verfahren zur Handhabung von stützringlosen Werkstücken ist Gegenstand des Patentanspruchs 8.

Erfindungsgemäß wurde erkannt, dass der gemäß dem vorbekannten Stand der Technik zwischen dem Stützring und einem Gewindeabschnitt des Vorformlings oder einem andersartig gestalteten Halterungsprofil für Verschlüsse angeordnete Fixierring als Halterungsprofil bei der Handhabung der Vorformlinge und der Behälter genutzt werden kann. Dieser Fixierring dient üblicherweise nach einem Aufsetzen von Schraubverschlüssen als Rückhaltering und wird von einem am Schraubverschluss angeformten ringartigen Profil hintergriffen. Bei einem erstmaligen Öffnen des Verschlusses reißt dieses Halterungsprofil ein und es ist für einen Benutzer unmittelbar erkennbar, dass es sich nicht mehr um einen original verschlossenen Behälter handelt.

Übliche Vorformlinge und Behälter weisen somit in einer häufigen Ausführungsform im Mündungsabschnitt ein Gewinde, den mit einem geringen Abstand zum Gewinde angeordneten Fixierring und zusätzlich den mit einem weiteren Abstand sowohl zum Fixierring als auch zum Gewinde angeordneten Stützring auf.

Durch ein Weglassen des Stützringes und eine Nutzung des Fixierringes als Halterungsprofil kann eine sichere und zuverlässige Handhabung der Vorformlinge und der Behälter ohne die Notwendigkeit eines zusätzlichen seitlich überstehenden Stützringes gewährleistet werden. Es wird somit zum einen das Material des Stützringes eingespart, darüber hinaus erschließen sich in ästhetischer Hinsicht auch vergrößerte Gestaltungsmöglichkeiten.

Eine einfache Herstellung wird dadurch unterstützt, dass der Mündungsabschnitt spritzgegossen ist.

Eine hohe Materialfestigkeit wird dadurch unterstützt, dass der Sicherungsring durch einen Spritzgußvorgang hergestellt ist.

Eine zweckmäßige Führung kann dadurch realisiert werden, dass die Handhabungseinrichtung zur Beaufschlagung des Fixierringes im Bereich einer dem Mündungsabschnitt abgewandten Seite des Werkstückes ausgebildet ist.

Im Anschluss an eine Befüllung des Behälters ist insbesondere daran gedacht, dass die Halteeinrichtung benachbart zu einer Einrichtung zum Aufsetzen von Verschlusskappen auf das Werkstück angeordnet ist.

Zur Bereitstellung von Originalitätsverschlüssen wird vorgeschlagen, dass die Halteeinrichtung durch eine Relativbewegung zum Fixierring das Einrasten eines Halterungsprofils der Verschlusskappe unter den Fixierring unterstützt.

Gemäß einer typischen Ausführungsform ist es möglich, dass die Halteeinrichtung zur Beaufschlagung von Vorformlingen ausgebildet ist, die zur Herstellung von blasgeformten Behältern vorgesehen sind.

Darüber hinaus ist auch daran gedacht, dass die Halteeinrichtung zur Beaufschlagung von blasgeformten Behältern ausgebildet ist.

In den Zeichnungen sind Ausführungsbeispiele der Erfindung schematisch dargestellt. Es zeigen:
- Fig. 1: eine perspektivische teilweise Darstellung eines Vorformlings mit Gewinde und Fixierring im Mündungsabschnitt,
- Fig. 2: einen Längsschnitt durch einen Vorformling ähnlich zur Ausführungsform in Fig. 1,
- Fig. 3: einen Längsschnitt durch einen von einer Handhabungseinrichtung im Bereich seines Fixierringes gehalterten Vorformlings mit locker aufgesetzter Verschlusskappe,
- Fig. 4: eine vergrößerte Darstellung der Einzelheit IV in Fig. 3,
- Fig. 5: die Anordnung gemäß Fig. 3 nach einem Aufschieben der Verschlusskappe auf den Mündungsabschnitt, jedoch vor einem Einrasten eines Halterungsprofils der Verschlusskappe hinter den Fixierring,
- Fig. 6: eine vergrößerte Darstellung der Einzelheit VI in Fig. 5 und
- Fig. 7: eine perspektivische teilweise Darstellung eines Längsschnittes durch einen Vorformling mit aufgesetzter und hinter dem Fixierring eingerasteter Verschlusskappe nach einem Zurückziehen der Halterungseinrichtung.

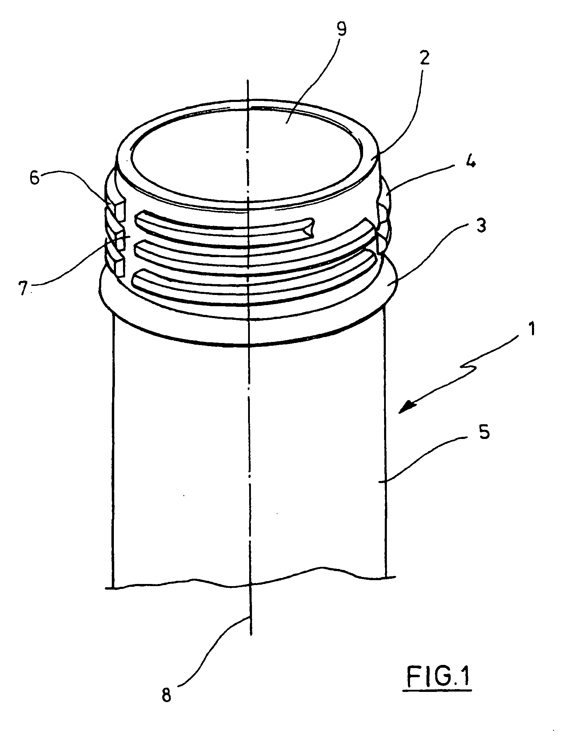

Bei der Ausführungsform in Fig. 1 ist ein lediglich teilweise und in einer Seitenansicht dargestellter Vorformling (1) im Bereich eines , Mündungsabschnittes (2) außenseitig mit einem umlaufenden Fixierring (3) versehen. Der Fixierring (3) erstreckt sich zwischen einem Gewindeabschnitt (4) und einem Seitenwandbereich (5) des Vorformlings (1). Der Gewindeabschnitt (4) ist mit einem Außengewinde (6) versehen.

Typischerweise wird der Fixierring (3) bei der spritzgußtechnischen Herstellung des Vorformlings (1) erzeugt. Der Fixierring (3) und das Außengewinde (6) sind somit einteilig am Vorformling (1) angeformt.

Der Fixierring (3) steht seitlich über eine Oberfläche des Vorformlings (1) mit einer Dimensionierung vor, die im wesentlichen einer Dimensionierung der Gewindegänge des Außengewindes (6) in dieser Richtung entspricht, vorzugsweise jedoch etwas größer ist.

Bei Vorformlingen (1), die zur Ausbildung von Behältern vorgesehen sind, die unter Druck stehende Flüssigkeiten, beispielsweise karbonisierte Getränke, aufnehmen sollen, sind im Bereich des Außengewindes (6) eine oder mehrere Entlüftungsnuten (7) angeordnet, die sich in einer Längsrichtung (8) des Vorformlings (1) erstrecken und den spiralartigen Gewindegang unterbrechen. Es wird hierdurch ein Druckabbau im Innenraum des Behälters bei noch aufgesetzter und lediglich gelöster Verschlusskappe ermöglicht.

im Bereich seiner dem Fixierring (3) abgewandten Ausdehnung begrenzt der Mandungsabschnitt (2) eine Öffnung (9) des Vorformlings (1).

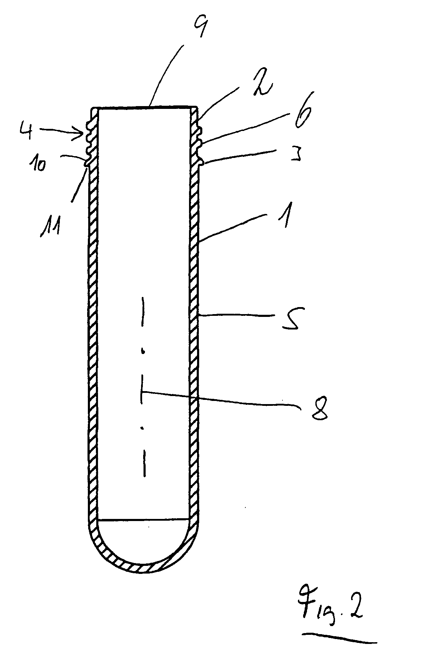

Fig. 2 zeigt einen Längsschnitt durch den Vorformling (1). Es ist insbesondere verdeutlicht, dass der Fixierring (3) im Bereich seiner dem Au ßengewinde (6) zugewandten Ausdehnung mit einer Einführanschrägung (10) im Bereich seiner dem Außengewinde (6) abgewandten Ausdehnung mit einem Absatz (11) versehen ist.

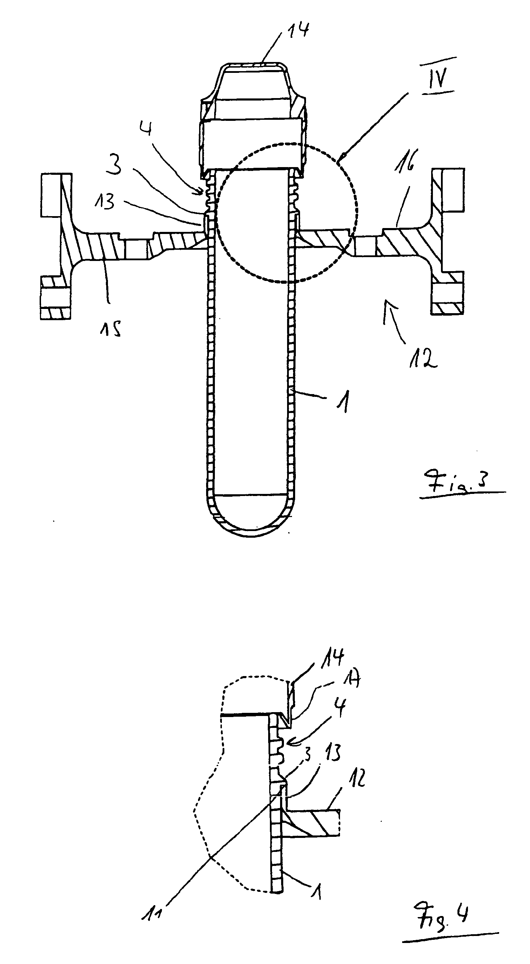

Fig. 3 zeigt den Vorformling (1) bei einer Anordnung im Bereich einer Halteeinrichtung (12). Die Halteeinrichtung (12) stützt hierbei den Vorformling (1) im Bereich eines Fixierringes (3) mit einem Flansch (13) ab. Insbesondere ist daran gedacht, den Flansch (13) als entlang eines Umfanges des Vorformlings (1) sich zumindest bereichsweise erstreckendes gebogenes Segment auszuführen.

Auf den Mündungsabschnitt (2) des Vorformlings (1) ist lose eine Verschlusskappe (14) aufgesetzt. Der Vorformling ist in Fig. 3 beispielhaft für ein zu halterndes Werkstück dargestellt. Insbesondere ist daran gedacht, dass im Bereich der Halteeinrichtung (12) auch einen Behälter zu positionieren und im Bereich seines Fixierringes (3) abzustützen, der durch eine blastechnische Verformung des Vorformlings (1) hergestellt wurde.

Die Halteeinrichtung (12) kann in unterschiedlichen Ausführungsformen realisiert sein und beispielsweise im Bereich einer Blasmaschine oder im Bereich einer Füllmaschine oder im Bereich von Transporteinrichtungen angeordnet sein. Beispielsweise ist es möglich, die Halteeinrichtung (12) aus zwei Halterungssegmenten (15, 16) zu konstruieren. Gemäß einer Ausführungsform können die Halterungssegmente (15, 16) relativ zueinander mit einem Abstand angeordnet sein, der einem Außendurchmesser des Vorformlings (1) entspricht, um hierdurch eine Führungsschiene bereitzustellen. Gemäß einer anderen Ausführungsform bilden die Halterungssegmente (15, 16) relativ zueinander beweglich angeordnete Teile einer zangenartigen Halteeinrichtung (12) aus.

Fig. 4 zeigt eine vergrößerte Darstellung der Einzeiheit IV in Fig. 3. Es ist insbesondere zu erkennen, dass der Flansch (13) den Fixierring (3) im Bereich des Absatzes (11) abstützt. Im Bereich der Verschlusskappe (14) ist ein Halterungsprofil (17) zu erkennen. Das Halterungsprofil (17) besteht im Wesentlichen aus einem schräg nach innen in die Verschlusskappe (14) umgebogenen Steg, der eine schräge Leitfläche bereitstellt.

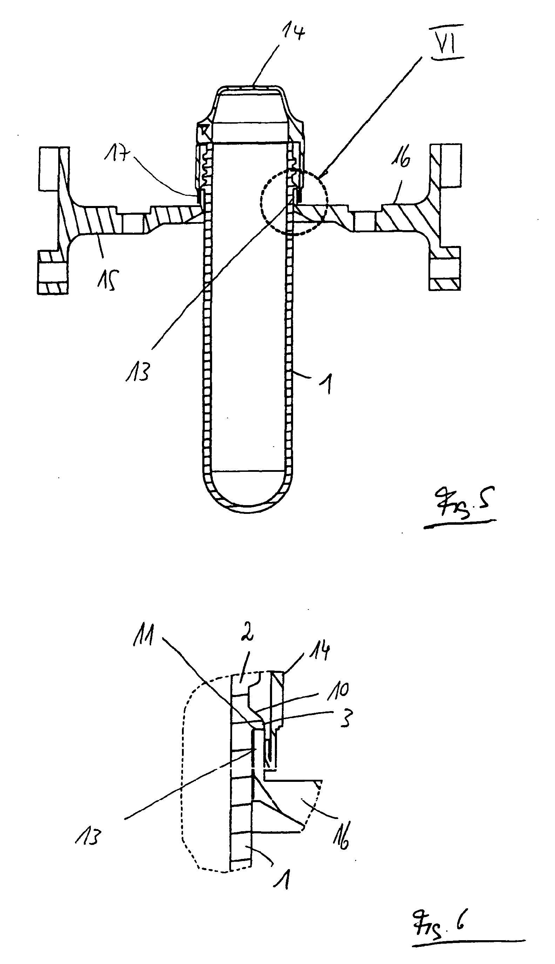

Fig. 5 zeigt die Anordnung gemäß Fig. 3 nach einem vollständigen Aufschieben der Verschlusskappe (14) auf den Vorformling (1). Das Halterungsprofil (17) ist in diesem Betriebszustand außerhalb des Flansches (13) angeordnet.

Fig. 6 zeigt die Einzelheit VI in Fig. 5 in einer vergrößerten Darstellung. Es ist zu erkennen, dass das Halterungsprofil (17) nach einem Entlanggleiten an der Einführanschrägung (10) des Fixierringes (3) federartig zusammengefaltet ist und außenseitig am Flansch (13) anliegt. Der Flansch (13) ist in diesem Betriebszustand noch gegen den Absatz (11) des Fixierringes (3) geführt.

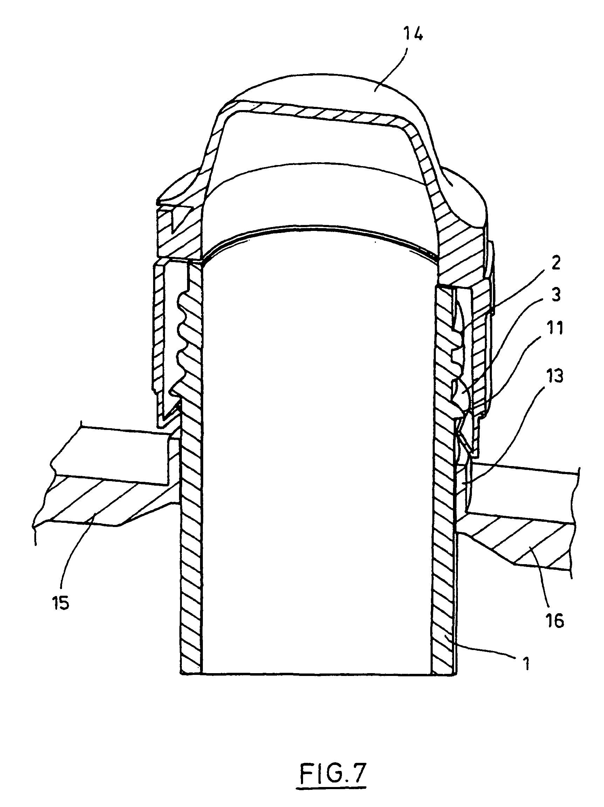

Fig. 7 zeigt eine teilweise Darstellung der Anordnung gemäß Fig. 5 nach einem teilweisen Zurückziehen des Flansches (13) in eine dem Mündungsabschnitt (2) abgewandte Richtung. Der Flansch (13) hat hierdurch den Absatz (11) des Fixierringes (3) freigegeben, so dass das Halterungsprofil (17) v-förmig auffedern konnte und hierdurch den Absatz (11) des Fixierringes (3) hintergreift. Hierdurch ist die Verschlusskappe (14) im Bereich des Vorformlings (1) arretiert. Auch an dieser Stelle sei noch einmal darauf hingewiesen, dass das Verschließen des Vorformlings (1) lediglich beispielhaft zur Vereinfachung dargestellt wurde und sich alle beschriebenen Vorgänge auch an einem zu verschließenden Behälter durchführen lassen.

Das vorstehend beschriebene Zurückziehen des Flansches (13) zur Ermöglichung eines Einfederns der Slcherungsllppe des Halterungsprofils (17) kann durch jede geeignete Relativbewegung zwischen dem Vorformling (1) bzw. dem geblasenen Behälter und der Halteeinrichtung (12) realisiert werden. Üblicherweise steht die ausgeformte und gefüllte Flasche vor dem Zurückziehen auf einem Trägerelement auf, wenn der Flansch (13) achsparallel zurückgezogen wird. Grundsätzlich ist ein Absenken der Halteeinrichtung (12) möglich, konstruktiv einfacher lässt sich jedoch eine Anordnung der Halteeinrichtung (12) auf einem gleichbleibenden Niveau in Kombination mit einem Anheben des verschlossenen Behälters von einer Flaschenauflage realisieren.

Bei einer Verwendung der Halteeinrichtung (12) im Bereich von Blasmaschinen und/oder im Bereich von Fülimaschinen können derartige Maschinen sowohl mit einer linearen Förderung der Vorformlinge bzw. Flaschen als auch mit rotierenden Transporträdern, Blasrädern und Füllrädern versehen sein.

Der Vorformling (1) bzw. der geblasene Behälter kann beispielsweise aus PET (Polyethylenterephthalat), PP (Polypropylen) oder PE (Polyethylen) ausgebildet sein.

## Patentansprüche

1. Vorrichtung mit einer Halteeinrichtung (12) zur Handhabung von Werkstücken (1) aus einem thermoplastischen Material, die einen Mündungsabschnitt und einen Fixierring (3) aufweisen, wobei die Halteeinrichtung (12) zur Beaufschlagung des Fixierringes (3) im Bereich einer dem Mündungsabschnitt (2) abgewandten Seite des Werkstückes ausgebildet ist, **dadurch gekennzeichnet,**
**dass** die Halteeinrichtung (12) an dem freien Ende einen Flansch (13) aufweist, der in der bestimmungsgemäßen Ausrichtung der Halteeinrichtung (12) mit seinem freie Ende vertikal nach oben weist und als entlang des Umfangs des Werkstücks (1) sich zumindest bereichsweise erstreckendes gebogenes Segment ausgeführt ist.

2. Vorrichtung nach Anspruch 1, **dadurch gekennzeichnet, dass** die Halteeinrichtung (12) zwei Haltesegmente (15, 16) mit jeweils einem Flansch (13) aufweist.

3. Vorrichtung nach einem der vorgenannten Ansprüche, **dadurch gekennzeichnet, dass** die Halteeinrichtung (12) durch eine Relativbewegung zum Fixierring (8) das Einrasten eines Halterungsprofils (17) der Verschlusskappe (14) unter den Fixierring (3) unterstützt.

4. Vorrichtung nach Anspruch 3, **dadurch gekennzeichnet, dass** Halteeinrichtung (12) ein den Flansch (13) tragendes Haltesegment (15-16) aufweist, dass der Flansch (13) in radialer Richtung eine solche Breite und zwischen einem freien Ende und dem Haltesegment (15, 16) eine solche eine Höhe aufweist, dass nach dem Aufbringen einer Verschlusakappe (14) auf das Werkstück (1) ein Halteprofil (17) der Verschlusskappe (14) zunächst radial außen am Flansch (13) anliegt und nach einem Entfernen der Halteeinrichtung (12) in axialer Richtung von der Verschlusskappe (14) und dem Mündungsbereich (2) das Halteprofil (17) seine bestimmungsgemäße, geöffnete und den Fixierring (3) hintergreifende Endform und Lage annimmt.

5. Vorrichtung nach einem der vorgenannten Ansprüche, **dadurch gekennzeichnet, dass** die Halteeinrichtung (12) benachbart zu einer Einrichtung zum Aufsetzen von Verschlusskappen (14) auf das Werkstück angeordnet ist.

6. Vorrichtung nach einem der vorgenannten Ansprüche, **dadurch gekennzeichnet, dass** die Halteeinrichtung (12) zur Beaufschlagung von Vorformlingen (1) ausgebildet ist, die zur Herstellung von blasgeformten Behältern vorgesehen sind.

7. Vorrichtung nach einem der vorgenannten Ansprüche, **dadurch gekennzeichnet, dass** die Halteeinrichtung (12) zur Beaufschlagung von blasgeformten Behältern ausgebildet ist.

8. Verfahren zur Handhabung von Werkstücken aus einem thermoplastischen Material, die einen Mündungsabschnitt und einen Fixierring aufweisen, wobei das Werkstück (1) im Bereich des Fixierringes (3) von einer Halteeinrichtung (12) gehaltert wird und auf den Mündungsbereich eine Verschlusskappe (14) mit Halteprofil (17) aufgebracht wird, **dadurch gekennzeichnet,**
**dass** das Halteprofil (17) nach dem Aufbringen der Verschlusskappe (14) zunächst radial außen an einem Flansch (13) der Halteeinrichtung (12) anliegt, und dass dann die Halteeinrichtung (12) und das Werkstück (1) relativ zueinander derart bewegt werden, dass sich die Halteeinrichtung (12) in axialer Richtung von der Verschlusskappe (14) und dem Mündungsbereich (2) entfernt und das Halteprofil (17) seine bestimmungsgemäße, geöffnete Endform und Lage annimmt.

9. Verfahren nach Anspruch 8, **dadurch gekennzeichnet, dass** das Halteprofil (17) nach der axialen Entfernung des Flansches (13) von der Verschlussklappe (14) und dem Mündungsbereich (2) mit einem freien, vertikal aufwärts gerichteten Ende in Richtung des Werkstücks (1) auf- oder einfedert.

10. Verfahren nach Anspruch 8 oder 9, **dadurch gekennzeichnet, dass** der Fixierring (3) von einem Flansch (13) der Halteeinrichtung (12) in einem dem Mündungsabschnitt (2) abgewandten Bereich abgestützt wird.

11. Verfahren nach Anspruch 8 bis 10, **dadurch gekennzeichnet, dass** das Werkstück nach einem Befüllen mit einem Füllgut mit einer Verschlusskappe (14) verschlossen wird.

12. Verfahren nach Anspruch 11, **dadurch gekennzeichnet, dass** die Verschlusskappe (14) nach einer Beendigung des Verschlussvorganges mit einem Halterungsprofil (17) nach einer Relativbewegung zwischen dem Werkstück und dem Flansch (13) hinter dem Fixierring (3) einrastet.

13. Verfahren nach einem der Ansprüche 8 bis 12, **dadurch gekennzeichnet, dass** von der Halteeinrichtung ein Vorformling (1) zur blastechnischen Formung von Behältern gehaltert wird.

14. Verfahren nach einem der Ansprüche 8 bis 13, **dadurch gekennzeichnet, dass** von der Halteeinrichtung (12) ein blasgeformter Behälter gehaltert wird.

## Claims

1. Fixture with a holding device (12) for handling workpieces (1) made of a thermoplastic material, which have a mouth section and a fixing ring (3), wherein the holding device (12) is designed to impinge on the fixing ring (3) in the area of a side, which faces away from the mouth section (2), of the workpiece, **characterised in that** the holding device (12) has a flange (13) at the free end, said flange with its free end pointing vertically upward in the intended alignment of the holding device (12) and being designed as a bent segment which extends at least zonally along the circumference of the workpiece (1).

2. Fixture according to claim 1, **characterised in that** the holding device (12) has two holding segments (15, 16) each with a flange (13).

3. Fixture according to any one of the preceding claims, **characterised in that** the holding device (12) supports, by a relative movement towards the fixing ring (8), the engagement of a mounting profile (17) of the closing cap (14) under the fixing ring (3).

4. Fixture according to claim 3, **characterised in that** the holding device (12) has a holding segment (15, 16) which carries the flange (13) and that the flange (13) in the radial direction has such a width and, between a free end and the holding segment (15, 16), such a height, that after placing a closing cap (14) on the workpiece (1), a holding profile (17) of the closing cap (14) first makes radial contact with the outside of the flange (13) and, after removal of the holding device (12) in the axial direction from the closing cap (14) and the mouth section (2), the holding profile (17) assumes its intended final shape and position which is opened and reaches behind the fixing ring (3).

5. Fixture according to any one of the preceding claims, **characterised in that** the holding device (12) is arranged adjacent to a device for placing closing caps (14) on the workpiece.

6. Fixture according to any one of the preceding claims, **characterised in that** the holding device (12) is designed to impinge on pre-forms (1) which are provided for the production of blow-moulded containers.

7. Fixture according to any one of the preceding claims, **characterised in that** the holding device (12) is designed to impinge on blow-moulded containers.

8. Method for handling workpieces made of a thermoplastic material, which have a mouth section and a fixing ring, wherein the workpiece (1) in the area of the fixing ring (3) is held by a holding device (12) and a closing cap (14) with holding profile (17) is placed on the mouth area, **characterised in**
**that** the holding profile (17), after placing the closing cap (14), first makes radial contact with the outside of a flange (13) of the holding device (12) and that the holding device (12) and the workpiece (1) are then moved relative to each other such that the holding device (12) departs, in the axial direction, from the closing cap (14) and the mouth area (2) and the holding profile (17) assumes its intended, opened final shape and position.

9. Method according to claim 8, **characterised in that** the holding profile (17), after the axial removal of the flange (13) from the closing cap (14) and the mouth area (2), springs back or compresses with a free, vertically upward end in the direction of the workpiece (1).

10. Method according to claim 8 or 9, **characterised in that** of the fixing ring (3) is supported by a flange (13) of the holding device (12) in an area facing away from the mouth section (2).

11. Method according to claim 8 to 10, **characterised in that** the workpiece, after filling with a filling material, is closed with a closing cap (14).

12. Method according to claim 11, **characterised in that** the closing cap (14), after completion of the closing process, engages, behind the fixing ring (3), with a mounting profile (17) after a relative movement between the workpiece and the flange (13).

13. Method according to any one of the claims 8 to 12, **characterised in that** the holding device holds a pre-form (1) for the blow-moulding of containers.

14. Method according to any one of the claims 8 to 13, **characterised in that** the holding device (12) holds a blow-moulded container.

## Revendications

1. Dispositif avec un dispositif de retenue (12) pour la manipulation de pièces (1) en un matériau thermoplastique qui présentent une section d'embouchure et un anneau de fixation (3), le dispositif de retenue (12) étant réalisé pour la sollicitation de l'anneau de fixation (3) dans la zone d'un côté éloigné de la section d'embouchure (2) de la pièce, **caractérisé en ce que** le dispositif de retenue (12) présente sur l'extrémité libre une bride (13) qui est dirigée verticalement vers le haut avec son extrémité libre dans l'orientation conforme aux dispositions du dispositif de retenue (12) et est réalisée comme un segment plié s'étendant au moins par endroits le long de la périphérie de la pièce (1).

2. Dispositif selon la revendication 1, **caractérisé en ce que** le dispositif de retenue (12) présente deux segments de retenue (15, 16) avec respectivement une bride (13).

3. Dispositif selon l'une quelconque des revendications précédentes, **caractérisé en ce que** le dispositif de retenue (12) soutient par un mouvement relatif vers l'anneau de fixation (8) l'encliquetage d'un profilé de support (17) du clapet de fermeture (14) sous l'anneau de fixation (3).

4. Dispositif selon la revendication 3, **caractérisé en ce que** le dispositif de retenue (12) présente un segment de retenue (15-16) portant la bride (13) ou un bras (15, 16) portant la bride (13), **en ce que** la bride (13) présente dans le sens radial une telle largeur et entre une extrémité libre et le segment de retenue (15, 16) une telle hauteur qu'après l'application d'un clapet de fermeture (14) sur la pièce (1), un profilé de retenue (17) du clapet de fermeture (14) repose tout d'abord radialement à l'extérieur contre la bride (13) et après un retrait du dispositif de retenue (12) dans le sens axial du clapet de fermeture (14) et de la zone d'embouchure (2), le profilé de retenue (17) prenne sa forme finale et sa position ouvertes, conformes aux dispositions et venant en prise derrière l'anneau de fixation (3).

5. Dispositif selon l'une quelconque des revendications précédentes, **caractérisé en ce que** le dispositif de retenue (12) est disposé de manière contiguë à un dispositif de placement de clapets de fermeture (14) sur la pièce.

6. Dispositif selon l'une quelconque des revendications précédentes, **caractérisé en ce que** le dispositif de retenue (12) est réalisé pour l'alimentation de préformes (1) qui sont prévues pour la fabrication de récipients formés par soufflage.

7. Dispositif selon l'une quelconque des revendications précédentes, **caractérisé en ce que** le dispositif de retenue (12) est réalisé pour l'alimentation de récipients formés par soufflage.

8. Procédé de manipulation de pièces en un matériau thermoplastique, qui présentent une section d'embouchure et un anneau de fixation, la pièce (1) étant maintenue dans la zone de l'anneau de fixation (3) par un dispositif de retenue (12) et un clapet de fermeture (14) avec un profilé de retenue (17) étant appliqué sur la zone d'embouchure, **caractérisé en ce que** le profilé de retenue (17) repose après l'application du clapet de fermeture (14) tout d'abord radialement à l'extérieur contre une bride (13) du dispositif de retenue (12) et **en ce que** le dispositif de retenue (12) et la pièce (1) sont ensuite déplacés l'un par rapport à l'autre de telle manière que le dispositif de retenue (12) s'éloigne dans le sens axial du clapet de fermeture (14) et de la zone d'embouchure (2) et le profilé de retenue (17) prenne sa forme finale et sa position ouvertes, conformes aux dispositions.

9. Procédé selon la revendication 8, **caractérisé en ce que** le profilé de retenue (17) se détend ou se comprime après l'éloignement axial de la bride (13) du clapet de fermeture (14) et de la zone d'embouchure (2) avec une extrémité libre, tournée verticalement vers le haut en direction de la pièce (1).

10. Procédé selon la revendication 8 ou 9, **caractérisé en ce que** l'anneau de fixation (3) est en appui par une bride (13) du dispositif de retenue (12) dans une zone éloignée de la section d'embouchure (2).

11. Procédé selon la revendication 8 à 10, **caractérisé en ce que** la pièce est fermée par un clapet de fermeture (14) après un remplissage d'un produit de remplissage.

12. Procédé selon la revendication 11, **caractérisé en ce que** le clapet de fermeture (14) s'encliquète à la fin du processus de fermeture avec un profilé de support (17) après un mouvement relatif entre la pièce et la bride (13) derrière l'anneau de fixation (3).

13. Procédé selon l'une quelconque des revendications 8 à 12, **caractérisé en ce qu'**une préforme (1) est maintenue par le dispositif de retenue pour le formage par soufflage de récipients.

14. Dispositif selon l'une quelconque des revendications 8 à 13, **caractérisé en ce qu'**un récipient formé par soufflage est maintenu par le dispositif de retenue (12).
